# EUROPEAN PATENT SPECIFICATION

(11) **EP 3 497 752 B1**
(45) Date of publication and mention of the grant of the patent: **17.02.2021**
(21) Application number: 17755097.7
(22) Date of filing: 08.08.2017
(51) Int. Cl.: H01R 13/03, H01R 13/533, H01R 43/00, B32B 15/01

(54) **ELECTRICAL CONTACT ELEMENT FOR AN ELECTRICAL CONNECTOR HAVING MICROSTRUCTURED CAVERNS UNDER THE CONTACT SURFACE**
ELEKTRISCHES KONTAKTELEMENT FÜR EINEN ELEKTRISCHEN VERBINDER MIT MIKROSTRUKTURIERTEN HOHLRÄUMEN UNTER DER KONTAKTFLÄCHE
ELÉMENT DE CONTACT ÉLECTRIQUE POUR UN CONNECTEUR ÉLECTRIQUE AYANT DES CAVERNES MICROSTRUCTURÉES SOUS LA SURFACE DE CONTACT

(30) Priority: 08.08.2016 DE 102016214693
(43) Date of publication of application: 19.06.2019
(73) Proprietor: TE Connectivity Germany GmbH, 64625 Bensheim (DE); Steinbeiss-Forschungszentrum, 66123 Saarbruecken (DE)
(72) Inventor: LEIDNER, Michael, 67466 Lambrecht (DE); MÜCKLICH, Frank, 66773 Schwalbach (DE); REINERT, Leander, 66793 Saarwellingen (DE); TRINH QUOC, Herr Kim Eric, 66121 Saarbrücken (DE); SCHMIDT, Helge, 67346 Speyer (DE); THOSS, Stefan, 67551 Worms (DE)
(74) Representative: Grünecker Patent- und Rechtsanwälte PartG mbB
(86) International application number: PCT/EP2017/070037
(87) International publication number: WO 2018/029179

(56) References cited:
- EP-A1- 2 528 167
- WO-A2-2013/087487
- US-A1- 2006 204 741
- US-A1- 2011 100 825
- US-A1- 2016 037 650
- US-B2- 7 294 028

## Description

The present invention relates to an electrically conductive contact element for a connector which has a contact surface, wherein caverns filled with an auxiliary material are arranged under the contact surface in a microstructure. The present invention further relates to an electrical connector comprising such an electrically conductive contact element.

The present invention further relates to a method for enclosing an auxiliary material under the contact surface of an electrically conductive contact element for an electrical connector.

Electrical connectors and their contact elements are known in the prior art in numerous designs. Electrical connectors are intended to be plugged together with a suitable connector counterpart in order to produce an electrical connection. Electrical connectors are generally used either for signal transmission or for power transmission and can be defined as an electromechanical system which provides a separable interface between two electronic subsystems. For this purpose, electrical connectors normally have electrically conductive contact elements which come into contact with a contact element of the connector counterpart when the connector is plugged together. The contact elements of the one connector element are commonly formed as contact pins and those of the counterpart are commonly formed as contact springs. When the connector and connector counterpart are in the plugged-together state, the contact springs exert elastic spring forces on the contact pins in order to guarantee a reliable, electrically conductive connection.

In motor vehicles, for example, electrical connectors serve to transmit energy and link electrical and electronic systems. In motor vehicles, connectors are exposed to extreme temperature variations, vibrations and corrosive media. An increase in the operation temperatures results in greater wear, in particular with the widespread tin-coated copper based contact elements. The so-called fretting corrosion represents the most serious wearing mechanism in this case. This oscillation wear caused by microvibrations leads to the formation of insulating oxide layers in contact areas and therefore to the malfunction of connectors.

Base contact surfaces in particular, e.g. with tin, nickel or alloys thereof are prone to friction corrosion (fretting or scuffing) in the event of small relative movements. Furthermore, in the case of multi-pole connectors, the plugging forces are often beyond those required by users and with noble contact surfaces, e.g. noble metal-based, the tendency for cold-welding represents a known problem.

Along with a high wear resistance, low plugging and pulling forces are required in order to facilitate the mounting and maintenance of connectors.

Moreover, a partial abrasion takes place at the contact surface of a contact element while a connector is being plugged together with a connector counterpart. This wear caused by abrasion limits the number of plug-ins and thus reduces their operating lives.

In order to optimize the plugging force, the surface wear or the behaviour of the scuffing (fretting), the contact surfaces of the connectors from the prior art are oiled or greased or special alloys are employed on the contact surface. The employment of special alloys is costly. Greased or oiled contact surfaces lose the applied grease or oil when in operation and resinify over the course of their lifetime or in the event of repeated plugging processes.

US 7,294,028 B2 discloses an electric contact having a metallic substrate to which a contact layer is applied. The contact layer may have a matrix, in which oil capsules are distributed.

US 2016/0037650 A1 discloses a method for the at least portion-wise and adhesive metallisation of a non-conductive workpiece including introducing periodic microstructures into the workpiece in regions to be metallised, within an area to be metallised that is enclosed by one or more limiting lines, by moulding a tool that is microstructured in accordance with the regions to be metallised within a moulding area.

The problem of the present invention is to provide an improved contact element for a connector which is reliably ready for use over the long term.

This problem is solved by the electrical contact element mentioned at the outset in that the contact surface has a surface texture with a deterministic pattern of geometric elements.

The method according to the invention solves this problem in that a method for enclosing an auxiliary material under the contact surface of an electrically conductive contact element for an electrical connector is provided, comprising the following steps: forming a microstructure at the contact surface, applying the auxiliary material onto the contact surface, enclosing the auxiliary material in the microstructure, so that caverns filled with auxiliary material are arranged under the contact surface and develop a surface texture with a deterministic pattern of geometric elements at the contact surface.

By means of the solution according to the invention, the auxiliary materials are firmly embedded in the contact element, as they are filled into caverns which are arranged under the contact surface in a microstructure. This prevents the auxiliary materials from being subjected to negative effects, e.g. resinification. An undesired loss of the auxiliary materials is ruled out by firmly embedding them. As well as liquid auxiliary materials, solid auxiliary materials can also be enclosed in the microstructure of the caverns in this way. A surface texture or textured surface reduces the bearing surface between the contact surface of the contact element and a contact surface of the connector counterpart when the connector and the connector counterpart are plugged together. This minimizes frictional forces acting between the contact surfaces, which advantageously accompanies a reduction in the necessary plugging forces. Moreover, the points of contact between the contact surfaces increase such that a textured surface lowers the electrical transition resistance between the contact surface of the connector to the contact surface of the connector counterpart. A further advantage is that the abrasion of the contact surface is reduced by the texturing.

An auxiliary material, also known as an additive, is understood to be materials which are added in rather small quantities in order to achieve or improve certain properties.

A cavern is understood to be an artificially created hollow space under the surface. The arrangement of the caverns under the contact surface means that the caverns do not have an output at the contact surface or, at best, an outlet with such tight dimensions that auxiliary material filled into the caverns cannot be achieved without establishing an opening from the contact surfaces into the caverns.

A microstructure is understood to be a fine structure in the micrometer range. In this case, it relates to a substantially regular arrangement of certain elements, here the caverns, with spacing preferably in the range of 0.5 to 300 µm between the elements, i.e. between adjacent caverns. The spatial dimensions in the caverns themselves are preferably in the range of 0.1 - 50 µm.

The solution according to the invention can be further developed by the following features, which are each individually advantageous and able to be combined as desired.

In a first embodiment, the microstructure can extend parallel to the contact surface. The microstructure can be arranged near the surface, for example in a range of up to 1000 µm deep, measured from the contact surface. This configuration guarantees that in the event of abrasion, openings from the contact surface into the caverns of the microstructure are created such that the auxiliary materials emerge from the caverns at the contact surface and that they obtain the desired positive effects there.

According to a further embodiment, the caverns of the microstructure can form a substantially homogeneous pattern. In this way, an even distribution of the auxiliary material below the contact surface is achieved.

In a further embodiment, the microstructure can form a structure which is periodic at least in sections. Such structures are simple to produce and have the advantage of reproducible properties. The periodic structure can form, for example, a line pattern, dot pattern, honeycomb pattern, cross-shaped pattern or the like.

In one embodiment, the periodic structure can have a periodic length of 0.5 to 300 µm, preferably 0.1 to 100 µm, in at least one direction. Periodic structures of this scale ensure an even supply of the auxiliary material at the contact surface.

According to further advantageous embodiments, the auxiliary substance can be selected from the group of antioxidants, corrosion protection agents, lubricants and acids. The auxiliary substance can be a solid or liquid auxiliary substance, for example an oil, grease, a paste or a solid lubricant such as graphite, CNT, MoS2, AgS2 or a combination of these materials.

The elements of the surface texture can have a high aspect ratio, which is understood to mean the ratio of the depth or height of a structure to its lateral extension. Textured surfaces can also have a periodicity in at least one direction. Examples of textures are elevations of or recesses in the contact surface with circular, elliptical, square, linear, v-shaped cross-sections.

According to a further embodiment, the surface texture of the contact surface is substantially congruent with the microstructure of the caverns. For example, the surface texture can be elevated above a cavern of the microstructure. In this embodiment, the contact surface can be textured with burls in which caverns filled with auxiliary substances are arranged. In this way, the advantages of a textured contact surface and a cavern microstructure with auxiliary material under the contact surface can be realised in a particularly simple and space-saving manner. It is naturally also possible to arrange the surface texture and the microstructure of the caverns alternately, i.e. offset from one another.

A contact element according to the invention can be produced by means of the method according to the invention.

In an embodiment of the method according to the invention, the auxiliary material can firstly be applied onto the contact surface and subsequently the microstructure can be formed. For example, the contact surface can firstly be coated with the auxiliary material, i.e. completely covered, which facilitates the application of the auxiliary material. When forming the microstructure, the auxiliary material is placed in the locations where the caverns will later develop, i.e. where it is enclosed in the microstructure.

According to an embodiment, the auxiliary material can be enclosed in the microstructure when forming the microstructure. According to this embodiment, the steps of forming the microstructure and enclosing the auxiliary material in the microstructure, i.e. in the caverns of the microstructure, proceed in one step, which speeds up the method according to the invention.

According to a further embodiment, the auxiliary material can be administered into the microstructure after the step of forming a microstructure. In this embodiment, the auxiliary material is only deposited at the locations where the caverns are later formed. In this way, the quantity of the necessary auxiliary material is reduced, which saves on material and costs.

To enclose the auxiliary material, the contact surface can be mechanically deformed, for example rolled. In the case of such a mechanical deformation, the areas of the microstructure which were previously still open to the contact surface, the auxiliary material is enclosed in the microstructure. Alternatively or additionally, the surface can be closed by applying a sealant onto the surface to enclose the auxiliary material. The surface can be coated with sealant material, for example. The sealant material can be like or unlike the material of the contact element.

In a further embodiment of the method according to the invention, the contact surface is treated with laser radiation in order to form the microstructure. Other radiation, such as electron radiation, can, of course, be employed in order to create microstructures, for example recesses, grooves, or the like. Advantageously, microstructures can be formed over large areas by such irradiations in a precise and reproducible manner in a short period of time.

In a particularly advantageous embodiment, the contact surface is treated with an interference pattern of laser radiation. In this way, two or more overlapping, preferably coherently and linearly polarising laser beams produce a systematically adjustable interference pattern. The intensity of the laser radiation is distributed within the interference pattern. In the case of positive interference, it intensifies and leads to particularly hot areas where the contact surface melts. In contrast, the contact surface is much colder at the minimum intensity, such that the contact surface does not melt or rather auxiliary material at this location is still present, whereas it is vaporised in regions of positive interference. Moreover, due to the high temperature gradients between minimal temperature (in the area of negative interference) and maximum temperature (in the area of positive interference), molten material of the contact surface are convected and a texture develops. The texture develops in that material of the contact surface is directed from areas of a maximum temperature and transported to areas of a minimum temperature.

If the contact surface of an electrically conductive contact element, on which a layer of auxiliary material has been applied, is, for example, irradiated with an interference pattern of laser radiation, the following occurs: in the area of positive interference, the auxiliary material is vaporised and volatilised, whereas in the area of negative interference, it remains on the contact surface. Furthermore, the material of the contact surface melts in areas of positive interference and spills, in a directed manner, into the areas of negative interference where, forming elevations, it covers the auxiliary material which remains there. In this way, a contact surface can be formed which has a burl structure wherein every burl has a cavity filled with auxiliary substances.

The invention will be explained in more detail below with reference to the exemplary figures. In accordance with the statements above, the different feature combinations illustrated in the drawings can be varied. Thus, one feature can be dispensed with, although it is illustrated in the figures, if the advantage linked to this feature is not relevant to a particular application. Similarly, a further feature can be added to an illustrated feature combination if its technical effect is depended on for an application.

For the sake of simplicity, the same reference numbers are used in the figures for elements which correspond to one another in function and/or structure. In different configurations, only differences from the preceding designs are mentioned.

In the drawings:
- Fig. 1: shows a schematic sequence of an inventive method according to a first embodiment;
- Fig. 1A and 1B: show a schematic top view of a contact surface equipped with microstructures;
- Fig. 1C and 1D: show a schematic top view of the contact surface of Figs. 1A or 1C with auxiliary materials administered into the microstructures.
- Fig. 1E: shows a schematic section along the cutting line E-E of Figs. 1B and 1D through the contact surface;
- Fig. 1F: shows the step of enclosing the auxiliary materials in the microstructures;
- Fig. 1G: shows a schematic section of the produced contact element;
- Fig. 2: shows a schematic sequence for producing an inventive contact element according to a method in another embodiment;
- Fig. 2A: shows a schematic sectional view of the contact surface with auxiliary material deposited thereon prior to the formation of the microstructure;
- Fig. 2B: shows the topography, measured by means of atomic force microscope, of the texture of the surface after laser irradiation.
- Fig. 2C: shows a schematic section along the cutting line B-B of Fig. 2B; and
- Fig. 3: shows a schematic view of a contact element according to the invention using the example of a contact pin and a contact spring while two connectors are plugged together in a schematic sectional view.

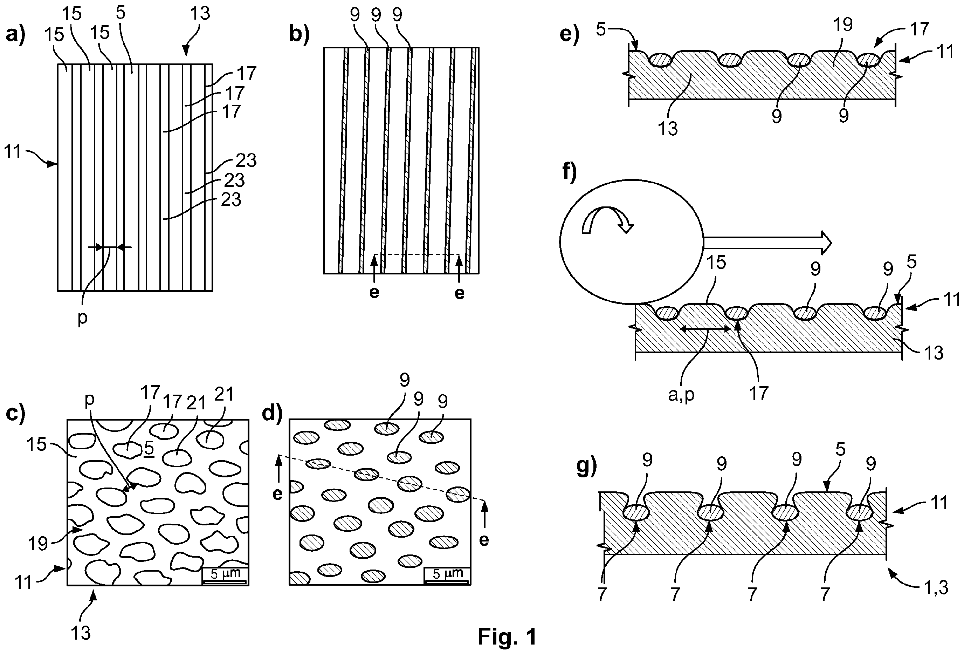

Fig. 1 shows, with a schematic series of pictures, the main and partially sectioned method stages according to an inventive method of a first embodiment.

The method serves to produce an inventive electrically conductive contact element 1 according to an exemplary embodiment. The contact element 1 for an electrical connector 3 has a contact surface 5. Caverns 7 filled with an auxiliary material 9 are located under the contact surface 5. The caverns 7 are arranged under the contact surface 5 in a microstructure 11. In the exemplary embodiment shown, the caverns 7 in the microstructure 11 are spaced regularly at a spacing a from one another in the microstructure 11. In the example of the contact element according to the invention produced according to the method shown in Fig. 1 and shown in Fig. 1, the spacing is at 0.5 to 300 µm, for example.

In the following, the individual method steps of forming a microstructure 11 at the contact surface 5, applying the auxiliary material 9 onto the contact surface 5 and enclosing the auxiliary material 9 in the microstructure 11 of Fig. 1 shall be explored in greater detail.

The starting material of the method according to the invention is a contact element 1 of a connector 3. The contact element 1 is electrically conductive and consists of a base material 13. The base material 13 can be copper or a copper alloy, for example.

In a first method step, a microstructure 11 is produced at the contact surface 5 of the base material 13 (Fig. 1A and 1C). In the embodiments shown, the microstructure 11 consists of, for example, elevations 15 and recesses 17 which periodically alternate with one another. In this way, the recesses 17 form, in the example of Fig. 1A, trenches 23, and the elevations form walls between them. Two adjacent recesses 17 have a spacing a of 0.5 to 300 µm, depending on the production method. In this way, a regular, periodic stripe structure arises as the microstructure 11 with a period length p which corresponds to the spacing a in the microstructure 11.

In Fig. 1C, an alternative microstructure 11 is shown in a schematic top view. The microstructure 11 in Fig. 1C also has a homogenous pattern 19 with periodic elevations 15 and recesses 17, wherein the recesses are formed substantially as circular disk-shaped holes 21. In the shown embodiment, two adjacent holes 21 have a spacing a of, for example, 0.5 to 300 µm, which corresponds to that of the period length p.

The microstructure 11 at the contact surface 5 which is shown in Fig. 1A or 1C can be created, for example, with the help of a laser or an electron beam. Advantageously, very large contact surfaces can be microstructured in a short period of time by using a laser or electron beam. However, other surface treatments, for example masking and etching, can be employed to form the microstructure 11.

After the microstructure 11 has been formed at the contact surface 5, the application of the auxiliary material 9 onto the contact surface 5 takes place in a next step according to the exemplary method of Fig. 1. In the exemplary method shown in Fig. 1, the auxiliary material 9 is filled into the recesses 17, i.e. the trenches 23 or holes 21 of the microstructure 11.

Subsequently, in a further method step which is schematically illustrated in Fig. 1F, the auxiliary material 9 is enclosed in the microstructure 11.

In the shown embodiment, the surface 5 is mechanically deformed, e.g. rolled, to enclose the auxiliary material 9. In the case of such a mechanical deformation, the auxiliary materials 9 are enclosed in the microstructure 11, since the areas of the microstructure 11 with elevations 15 are rolled over the auxiliary material 9 arranged in the recesses 17. As a result the recesses 17 are sealed and caverns 7 filled with auxiliary material 9 are formed.

The electrically conductive contact element 1 for an electrical connector 3 which results therefrom is schematically illustrated in Fig. 1G, in which the caverns 7 filled with an auxiliary material 9, which are arranged in a microstructure 11 in the contact surface 5, can be identified.

Instead of a mechanical deformation, for example rolling, the auxiliary material 9 could also be enclosed in the microstructure 11 by administering a sealant (not shown) onto the surface 5 of the intermediate step shown in Fig. 1E. A coating (not shown) could be deposited onto the surface 5 in the intermediate step shown in Fig. 1E in order to seal the recesses 17 to enclose the auxiliary material 9 in the caverns 7.

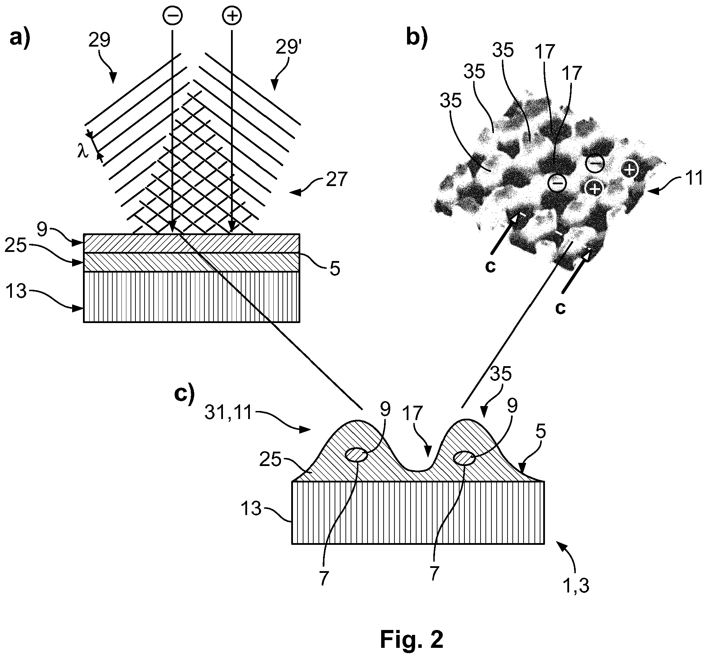

In Fig. 2, a further exemplary method according to the invention for enclosing an auxiliary material 9 under the contact surface 5 of an electrically conductive contact element 1 for a connector 3 is shown. In the case of this method, the contact element 1 for the connector 3 in turn comprises a base material 13. The base material 13, as in the embodiment of Fig. 1, can be copper or a copper alloy, for example. In contrast to the embodiment of Fig. 1, a coating 25 is arranged on a surface of the base material 13. The coating 25 can have, for example, tin, nickel, silver or alloys of tin, nickel, silver and/or other elements. The coating 25 can be applied onto the base material 13 by hot-dip tinning, for example. A surface of the coating 25 facing away from the base material forms the contact surface 5.

In the case of the method of the embodiment shown in Fig. 2, the auxiliary material 9 is firstly applied onto the contact surface 5. The contact surface 5 can, for example, be completely coated with the auxiliary material 9, as illustrated in Fig. 2A, for example. The auxiliary material 9 can have, for example, oil, grease, a paste or a solid lubricant such as graphite, CNT, MoS2, AgS2 or a combination thereof.

After the auxiliary material 9 has been applied onto the contact surface 5, the microstructure 11 is subsequently formed. In the exemplary method shown, the auxiliary material 9 is enclosed in the microstructure 11 when forming the microstructure 11. For this purpose, the contact surface is treated with an interference pattern 27 by laser radiation 29, 29'.

In the case of such a laser interference texturing, two or more overlapping, preferably coherently or linearly polarising laser beams 29, 29', produce a systematically adjustable interference pattern 27. A prerequisite for this is the spatial and temporal coherence of the laser radiation 29, 29'. The spatial coherence can be compromised by interaction with the environment or the optical elements of the apparatus for creating the interference radiation. The temporal coherence depends on the spectral bandwidth λ of the laser radiation 29, 29'. Standard coherence lengths of the spectral bandwidth are in the range of 266 to 1064 nm.

By selecting the laser radiation and the quantity and the relative orientation of the laser radiation, various interference patterns 27, for example line patterns, dot patterns, honeycomb patterns, cross-shaped patterns, etc. can thus be created. The interference pattern 27 gives the microstructure 11 and the surface textures 31 of the contact surface 5.

If the contact surface S is treated with an interference pattern 27 of laser radiation 29, 29', two or more overlapping, coherent and linearly polarising laser beams 29, 29' produce a systematically adjustable interference pattern 27. The intensity of the laser radiation is distributed within the interference pattern 27. In the case of positive interference (+), it intensifies and leads to particularly hot areas at which the contact surface 5 melts. In contrast, in the case of negative interference (-) at the minimum intensity, the contact surface 5 is much colder, such that the contact surface 5 does not melt or rather auxiliary material 9 at this location is still present, whereas it is vaporised in regions of positive interference. Moreover, due to the high temperature gradients between minimal temperature (in the area of negative interference) and maximum temperature (in the area of positive interference), molten material of the contact surface 5 is convected and a texture 31 develops. The texture 31 develops in that material of the contact surface 5 is directed from areas of a maximum temperature and transported to areas of a minimum temperature.

If the contact surface 5 of an electrically conductive contact element 1, onto which a layer of auxiliary material 9 has been applied, is irradiated with an interference pattern 27 of laser radiation 29, 29' (Fig. 1A), the following occurs: in the area of positive interference (+), the auxiliary material 9 is vaporised and volatilised, whereas, in the area of negative interference (-) it remains on the contact surface 5. Furthermore, the material melts the contact surface 5 in areas of positive interference and spills, in a directed manner, into the areas of negative interference where, forming elevations 15, it covers the auxiliary material 9 which remains there. In this way, a contact surface 5, such as in Fig. 2B and 2C, can be formed which has a burl structure 33, wherein every burl 33 has a cavity 7 filled with auxiliary substances.

In the case of interference texturing, the auxiliary material 9 is thus enclosed in the microstructure 11 when forming the microstructure 11. At the same time, a texturing 31 of the contact surface 5 takes place. In the exemplary embodiment shown, the surface texture 31 is formed by a burl structure 33 with regularly arranged burls 35 and recesses 17 in between. In the exemplary embodiment shown, the surface texture 31, i.e. the burl structure 33, is congruent with the microstructure 11 of the caverns 7 filled with auxiliary materials 9. In this case, the surface texture 31 is elevated above a cavern 7 of the microstructure 11. In the shown example, a cavern 7 filled with auxiliary materials 9 is arranged in every burl 35.

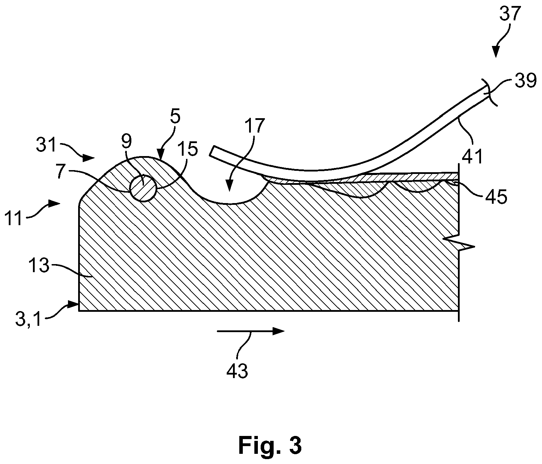

Finally, Fig. 3 is explored, which shows a highly schematic and partially sectioned illustration of portions of a connector 3 with an electrically conductive contact element 1 according to the invention with a mating connector 37 while being plugged together.

Fig. 3 shows a contact element 1 of the connector. The contact element 1 is formed, for example, as a contact pin and is illustrated as sectioned. The contact element 1 is electrically conductive and consists of a base material 13, for example a copper or copper alloy. The contact element 1 has a contact surface 5. Caverns 7 filled with auxiliary material 9 are arranged under the contact surface 5 in a microstructure 11. The contact surface 5 in the shown embodiment has a surface texture 31 which consists of periodically alternating elevations 15 and recesses 17. A cavern 7, which is filled with auxiliary material 9, of the microstructure 11 is arranged in every elevation 15. The surface texture 31 and the microstructure 11 of the contact element 1 of Fig. 3 thus correspond substantially to those of Fig. 2, with the exception that the coating 25 has been omitted and the auxiliary material 9 has been administered directly onto the base material 13.

Fig. 3 further shows a portion of a further contact element 39 of a mating connector 37. The mating connector 37 is intended to be plugged together with the connector 3. The further contact element 39 has a further contact surface 41 which comes into contact with the contact surface 5 of the contact element 1 when the connector 3 is plugged together with the mating connector 37. The further contact element 39 is formed as an elastically deformable contact spring.

If the connector 3 and the mating connector 37, as illustrated in Fig. 3, are plugged together, the further contact element 39 touches the contact element 1 in order to produce an electrically conductive connection. While the connector 3 is being plugged together with the mating connector 37, the contact element 1 moves along a relative plugging direction 43 relative to the further contact element 39.

Due to the pressing force exerted by the contact surface 41 of the further contact element 39 onto the contact surface 5 of the contact element 1, frictional forces act between contact surface 5 and the further contact surface 41, which must be overcome while the connector 3 is being plugged together with the mating connector 37. In order to reduce these forces, the contact surface 5 is equipped with a surface texture 31. Furthermore, the surface texture 31 and the microstructure 11 of the contact element 1 are partially broken open while being plugged together. Entrances to the closed caverns 7, which were previously under the contact surface 5, are created by the frictional forces. The caverns 7 open out onto the contact surface 5. The auxiliary material 9 can emerge from the cavern 7 and form a film 45 of auxiliary material 9 on the contact surface 5, which forms the desired positive effect, for example reducing friction, corrosion protection.

### Reference numbers

- 1: Contact element
- 3: Connector
- 5: Contact surface
- 7: Cavern
- 9: Auxiliary material
- 11: Microstructure
- 13: Base material
- 15: Elevation
- 17: Recess
- 19: Homogeneous pattern
- 21: Holes
- 23: Trenches
- 25: Coating
- 27: Interference pattern
- 29, 29': Laser radiation
- 31: Surface texture
- 33: Burl structure
- 35: Burl
- 37: Mating connector
- 39: Further contact element
- 41: Further contact surface
- 43: Plugging direction
- 45: Film of auxiliary material

- a: Spacing in the microstructure
- p: Period length
- λ: Spectral bandwidth laser radiation
- +: Positive interference
- -: Negative interference

## Claims

1. An electrically conductive contact element (1) for an electrical connector (3) which has a contact surface (5), wherein caverns (7) filled with an auxiliary material (9) which are arranged under the contact surface (5) in a microstructure (11), **characterised in that** the contact surface (5) has a surface texture (31) with a deterministic pattern of geometric elements.

2. The electrically conductive contact element (1) according to Claim 1, **characterised in that** the microstructure (11) extends parallel to the contact surface (5).

3. The electrically conductive contact element according to Claim 1 or 2, **characterised in that** the caverns (7) form a substantially homogeneous pattern (19) with the microstructure (11).

4. The electrically conductive contact element (1) according to any one of Claims 1 to 3, **characterised in that** the microstructure (11) forms a structure which is periodic at least in sections.

5. The electrically conductive contact element (1) according to Claim 4, **characterised in that** the periodic microstructure (11) has a period length (p) of 0.5 µm to 300 µm, preferably of 1 µm to 100 µm, in at least one direction.

6. The electrically conductive contact element (1) according to any one of Claims 1 to 5, **characterised in that** the auxiliary material (9) is selected from the group of antioxidants, corrosion protection agents, lubricants and acids.

7. The electrically conductive contact element (1) according to any one of Claims 1 to 6, **characterised in that** the surface texture (31) is substantially congruent with the microstructure (11) of the caverns (7).

8. The electrically conductive contact element (1) according to any one of Claims 1 to 7, **characterised in that** the surface texture (31) is elevated above a cavern (7) of the microstructure (11).

9. An electrical connector (3), comprising an electrically conductive contact element (1) according to any one of Claims 1 to 8.

10. A method for enclosing an auxiliary material (9) under the contact surface (5) of an electrically conductive contact element (1) for an electrical connector (3), comprising the following steps:
- forming a microstructure (11) at the contact surface (5),
- applying the auxiliary material (9) onto the contact surface (5),
- enclosing the auxiliary material (9) in the microstructure (11), so that caverns (7) filled with the auxiliary material (9) are arranged under the contact surface, **characterised by** developing a surface texture (31) with a deterministic pattern of geometric elements at the contact surface (5).

11. The method according to Claim 10, **characterised in that** firstly the auxiliary material (9) is applied onto the contact surface (5) and subsequently the microstructure (11) is formed.

12. The method according to Claim 11, **characterised in that** the auxiliary material (9) is enclosed in the caverns (7) of the microstructure (11) when forming the microstructure (11).

13. The method according to claim 10, **characterised in that** the auxiliary material (9) is administered into the microstructure (11) following the forming step.

14. The method according to Claim 13, **characterised in that** the contact surface (5) is mechanically deformed to enclose the auxiliary material (9), or a sealing is applied onto the contact surface (5).

15. The method according to any one of Claims 10 to 14, **characterised in that** the contact surface (5) is treated with laser radiation (29), preferably with an interference pattern (27) of laser radiation (29, 29'), in order to form the microstructure (11).

## Patentansprüche

1. Elektrisch leitendes Kontaktelement (1) für einen elektrischen Verbinder (3), das eine Kontaktfläche (5) aufweist, wobei mit einem Hilfsmaterial (9) gefüllte Hohlräume (7) unter der Kontaktfläche (5) in eine Mikrogefüge (11) angeordnet sind, **dadurch gekennzeichnet, dass** die Kontaktfläche (5) eine Oberflächentextur (31) mit einem deterministischen Muster geometrischer Elemente aufweist.

2. Elektrisch leitendes Kontaktelement (1) nach Anspruch 1, **dadurch gekennzeichnet, dass** sich das Mikrogefüge (11) parallel zu der Kontaktfläche (5) erstreckt.

3. Elektrisch leitendes Kontaktelement nach Anspruch 1 oder 2, **dadurch gekennzeichnet, dass** die Hohlräume (7) mit dem Mikrogefüge (11) ein im Wesentlichen homogenes Muster (19) bilden.

4. Elektrisch leitendes Kontaktelement (1) nach einem der Ansprüche 1 bis 3, **dadurch gekennzeichnet, dass** das Mikrogefüge (11) eine Struktur bildet, die wenigstens in Abschnitten periodisch ist.

5. Elektrisch leitendes Kontaktelement (1) nach Anspruch 4, **dadurch gekennzeichnet, dass** das periodische Mikrogefüge (11) in wenigstens einer Richtung eine Periodenlänge (p) von 0,5 µm bis 300 µm, vorzugsweise von 1 µm bis 100 µm, hat.

6. Elektrisch leitendes Kontaktelement (1) nach einem der Ansprüche 1 bis 5, **dadurch gekennzeichnet, dass** das Hilfsmaterial (9) aus der Gruppe von Antioxidantien, Korrosionsschutzmitteln, Schmiermitteln und Säuren ausgewählt wird.

7. Elektrisch leitendes Kontaktelement (1) nach einem der Ansprüche 1 bis 6, **dadurch gekennzeichnet, dass** die Oberflächentextur (31) im Wesentlichen kongruent mit dem Mikrogefüge (11) der Hohlräume (7) ist.

8. Elektrisch leitendes Kontaktelement (1) nach einem der Ansprüche 1 bis 7, **dadurch gekennzeichnet, dass** die Oberflächentextur (31) über einen Hohlraum (7) des Mikrogefüges (11) erhöht ist.

9. Elektrischer Verbinder (3), umfassend ein elektrisch leitendes Kontaktelement (1) nach einem der Ansprüche 1 bis 8.

10. Verfahren zum Einschließen eines Hilfsmaterials (9) unter der Kontaktfläche (5) eines elektrisch leitenden Kontaktelementes (1) für einen elektrischen Verbinder (3), umfassend die folgenden Schritte:
- Ausbilden eines Mikrogefüges (11) an der Kontaktfläche (5),
- Aufbringen des Hilfsmaterials (9) auf die Kontaktfläche (5),
- Einschließen des Hilfsmaterials (9) in das Mikrogefüge (11), so dass mit dem Hilfsmaterial (9) gefüllte Hohlräume (7) unter der Kontaktfläche angeordnet sind, **gekennzeichnet durch** Entwickeln einer Oberflächentextur (31) mit einem deterministischen Muster geometrischer Elemente an der Kontaktfläche (5).

11. Verfahren nach Anspruch 10, **dadurch gekennzeichnet, dass** zunächst das Hilfsmaterial (9) auf die Kontaktfläche (5) aufgebracht wird und anschließend das Mikrogefüge (11) ausgebildet wird.

12. Verfahren nach Anspruch 11, **dadurch gekennzeichnet, dass** das Hilfsmaterial (9) beim Ausbilden des Mikrogefüges (11) in den Hohlräumen (7) des Mikrogefüges (11) eingeschlossen wird.

13. Verfahren nach Anspruch 10, **dadurch gekennzeichnet, dass** das Hilfsmaterial (9) im Anschluss an den Schritt zum Ausbilden in die Mikrostruktur (11) eingebracht wird.

14. Verfahren nach Anspruch 13, **dadurch gekennzeichnet, dass** die Kontaktfläche (5) mechanisch verformt wird, um das Hilfsmaterial (9) einzuschließen, oder eine Dichtung auf die Kontaktfläche (5) aufgebracht wird.

15. Verfahren nach einem der Ansprüche 10 bis 14, **dadurch gekennzeichnet, dass** die Kontaktfläche (5) mit Laserstrahlung (29), vorzugsweise mit einem Interferenzmuster (27) aus Laserstrahlung (29, 29'), behandelt wird, um das Mikrogefüge (11) auszubilden.

## Revendications

1. Élément de contact électriquement conducteur (1) pour un connecteur électrique (3) qui présente une surface de contact (5), des cavernes (7) remplies d'un matériau auxiliaire (9) qui sont disposées sous la surface de contact (5) dans une microstructure (11), **caractérisé en ce que** la surface de contact (5) présente une texture de surface (31) avec un motif déterminé d'éléments géométriques.

2. Élément de contact électriquement conducteur (1) selon la revendication 1, **caractérisé en ce que** la microstructure (11) s'étend parallèle à la surface de contact (5).

3. Élément de contact électriquement conducteur selon la revendication 1 ou 2, **caractérisé en ce que** les cavernes (7) forment un motif sensiblement homogène (19) avec la microstructure (11).

4. Élément de contact électriquement conducteur (1) selon l'une quelconque des revendications 1 à 3, **caractérisé en ce que** la microstructure (11) forme une structure qui est périodique au moins par sections.

5. Élément de contact électriquement conducteur (1) selon la revendication 4, **caractérisé en ce que** la microstructure (11) périodique présente une longueur de période (p) de 0,5 µm à 300 µm, préférablement de 1 µm à 100 µm, dans au moins un sens.

6. Élément de contact électriquement conducteur (1) selon l'une quelconque des revendications 1 à 5, **caractérisé en ce que** le matériau auxiliaire (9) est sélectionné dans le groupe des antioxydants, des agents de protection contre la corrosion, des agents lubrifiants et des acides.

7. Élément de contact électriquement conducteur (1) selon l'une quelconque des revendications 1 à 6, **caractérisé en ce que** la texture de surface (31) est sensiblement compatible avec la microstructure (11) des cavernes (7).

8. Élément de contact électriquement conducteur (1) selon l'une quelconque des revendications 1 à 7, **caractérisé en ce que** la texture de surface (31) est élevée au-dessus d'une caverne (7) de la microstructure (11).

9. Connecteur électrique (3), comprenant un élément de contact électriquement conducteur (1) selon l'une quelconque des revendications 1 à 8.

10. Procédé d'enfermement d'un matériau auxiliaire (9) sous la surface de contact (5) d'un élément de contact électriquement conducteur (1) pour un connecteur électrique (3), comprenant les étapes suivantes :
- formation d'une microstructure (11) au niveau de la surface de contact (5),
- application du matériau auxiliaire (9) sur la surface de contact (5),
- enfermement du matériau auxiliaire (9) dans la microstructure (11), de sorte que les cavernes (7) remplies du matériau auxiliaire (9) sont disposées sous la surface de contact, **caractérisé par** le développement d'une texture de surface (31) avec un motif déterminé d'éléments géométriques au niveau de la surface de contact (5).

11. Procédé selon la revendication 10, **caractérisé en ce que** premièrement le matériau auxiliaire (9) est appliqué sur la surface de contact (5) et par la suite la microstructure (11) est formée.

12. Procédé selon la revendication 11, **caractérisé en ce que** le matériau auxiliaire (9) est enfermé dans les cavernes (7) de la microstructure (11) lors de la formation de la microstructure (11).

13. Procédé selon la revendication 10, **caractérisé en ce que** le matériau auxiliaire (9) est administré dans la microstructure (11) suite à l'étape de formation.

14. Procédé selon la revendication 13, **caractérisé en ce que** la surface de contact (5) est mécaniquement déformée pour enfermer le matériau auxiliaire (9), ou qu'une étanchéité est appliquée sur la surface de contact (5).

15. Procédé selon l'une quelconque des revendications 10 à 14, **caractérisé en ce que** la surface de contact (5) est traitée par rayonnement laser (29), préférablement avec un motif d'interférence (27) de rayonnement laser (29, 29'), afin de former la microstructure (11).
